# EUROPEAN PATENT APPLICATION

(11) **EP 4 060 598 A1**
(43) Date of publication of application: **21.09.2022**
(21) Application number: 21189663.4
(22) Date of filing: 04.08.2021
(51) Int. Cl.: G06Q 50/06, H01M 10/42

(54) **INFORMATION SYSTEM AND INFORMATION PROVIDING METHOD FOR STORAGE BATTERY**

(30) Priority: 15.03.2021 JP 2021041204
(71) Applicant: KABUSHIKI KAISHA TOSHIBA, Minato-ku Tokyo 105-0023 (JP); Toshiba Digital Solutions Corporation, Kawasaki-shi, Kanagawa 212-0013 (JP)
(72) Inventor: MORITA, Tomokazu, Tokyo, 105-0023 (JP); FUJIYA, Yumi, Tokyo, 105-0023 (JP); SUGIYAMA, Nobukatsu, Tokyo, 105-0023 (JP); SHOJI, Masahiro, Kanagawa, 212-0013 (JP); TAKEDA, Mari, Kanagawa, 212-0013 (JP); MASUDA, Tamotsu, Tokyo, 105-0023 (JP)
(74) Representative: Marks & Clerk LLP

(57) **Abstract**

[PROBLEM] To provide a data distribution platform for data about storage batteries.

[SOLVING MEANS] An information system for storage batteries according to an embodiment accepts registration of information about a manufactured storage battery from a first terminal and registration of a use history of a storage battery from a second terminal, the use history including battery state information acquired at each of points in time during a period of use of the storage battery, and accumulates the information about the storage battery and the use history. The information system uses the registered information about the storage battery and/or the registered use history to create an internal state estimation result with a predetermined evaluation technique, and accumulates the internal state estimation result as platform-based evaluation information in association with the registered information and/or the registered use history. The information system provides the registered information about the storage battery and the associated platform-based evaluation information or the registered use history and the associated platform-based evaluation information to at least one of the terminals.

## Description

### TECHNICAL FIELD

Embodiments of the present invention relate to a technique for distributing data such as operation data and analysis data about storage batteries.

### BACKGROUND ART

Indicators of storage battery performance include characteristic information indicating the residual life and deterioration behavior. For example, automobile manufacturers can acquire information about the states of storage batteries mounted on their electric vehicles or hybrid vehicles and analyze the residual life and deterioration behavior (storage battery operation data) based on the actual use of the batteries (see Patent Document 1). Storage battery manufacturers can also perform durability tests for their storage battery products during development or before selling and provide characteristic information indicating the residual live and deterioration behavior (storage battery analysis data) based on the test results.

### PRIOR ART DOCUMENT

### PATENT DOCUMENT

[Patent Document 1] Japanese Patent No. 5413087

### DISCLOSURE OF THE INVENTION

### PROBLEMS TO BE SOLVED BY THE INVENTION

It is an object of the present invention to provide a data distribution platform which allows business entity to register and use various types of information about storage batteries.

### MEANS FOR SOLVING THE PROBLEMS

According to an embodiment, an information system for transmitting and receiving various types of information about a storage battery is provided. The information system includes a first information registration section configured to accept registration of information about a manufactured storage battery from a first terminal; a second information registration section configured to accept registration of a use history of a storage battery from a second terminal, the use history being collected by a storage battery mounted device and including battery state information acquired at each of points in time during a period of use of the storage battery; an accumulation control section configured to accumulate the information about the storage battery and the use history; and an evaluation processing section configured to create an internal state estimation result with a predetermined evaluation technique by using the registered information about the storage battery and/or the registered use history; wherein the internal state estimation result as a platform-based evaluation information piece is accumulated in association with the registered information piece and/or the registered use history; the information system further comprising a data providing section configured to provide the registered information piece about the storage battery and the associated platform-based evaluation information piece or the registered use history and the associated platform-based evaluation information piece to at least one of the terminals.

### BRIEF DESCRIPTION OF THE DRAWINGS

[Fig. 1] A diagram for explaining the overview of a Cyber Physical System (CPS) system.
[Fig. 2] A block diagram showing an exemplary configuration of an information processing system.
[Fig. 3] A diagram showing an exemplary implementation of the information processing system.
[Fig. 4] A diagram showing a network configuration of an information system for storage batteries according to Embodiment 1.
[Fig. 5] A functional block diagram showing a management apparatus according to Embodiment 1.
[Fig. 6] A schematic explanatory diagram showing an information distribution platform constructed by the information system according to Embodiment 1.
[Fig. 7] A diagram showing functions provided by the information system according to Embodiment 1 and examples of various types of data handled in the information system.
[Fig. 8] A diagram showing a flow of processing performed by the information system according to Embodiment 1. MODE FOR CARRYING OUT THE INVENTION

An embodiment of the present invention will be described with reference to the accompanying drawings.

A Cyber Physical System (CPS) can be deployed to offer services (solutions) not only within each of closed systems but also across a plurality of systems in conjunction with a System of Systems (SoS) which coordinates the systems.

An embodiment of an information system for storage batteries described below is an example of use (exploitation) of data beyond the framework of individual systems achieved through the deployment of the CPS, and relates primarily to a data distribution technique for data exploitation between businesses (in a business-to-business relationship).

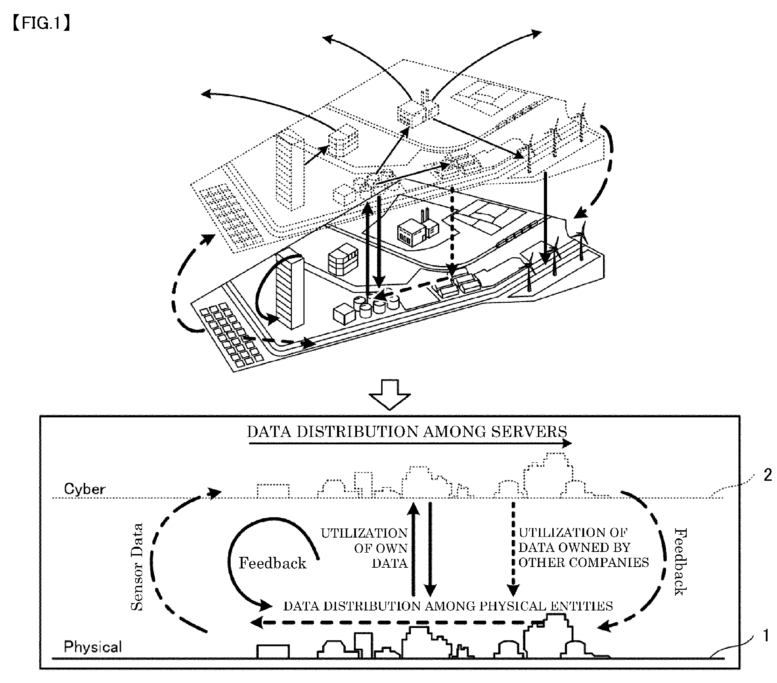

The overview of the CPS system is now described with reference to Figs. 1 to 3. Figure 1 is a diagram for explaining the overview of the CPS system.

As shown in Fig. 1, the CPS system includes a physical world (Physical) 1 and a cyber world (Cyber) 2. In the Physical 1, data (including sensor data) is collected. In the Cyber 2, the collected data is analyzed with digital and other technologies and is stored in an easily accessible form of information or knowledge, and the result is fed back to the Physical 1. This mechanism can create added value which cannot be provided by only one of the Physical 1 and the Cyber 2, for example.

The CPS system can provide a platform on which companies can use (exploit) not only their own data but also data owned by other companies through data distribution among servers and data distribution among physical entities.

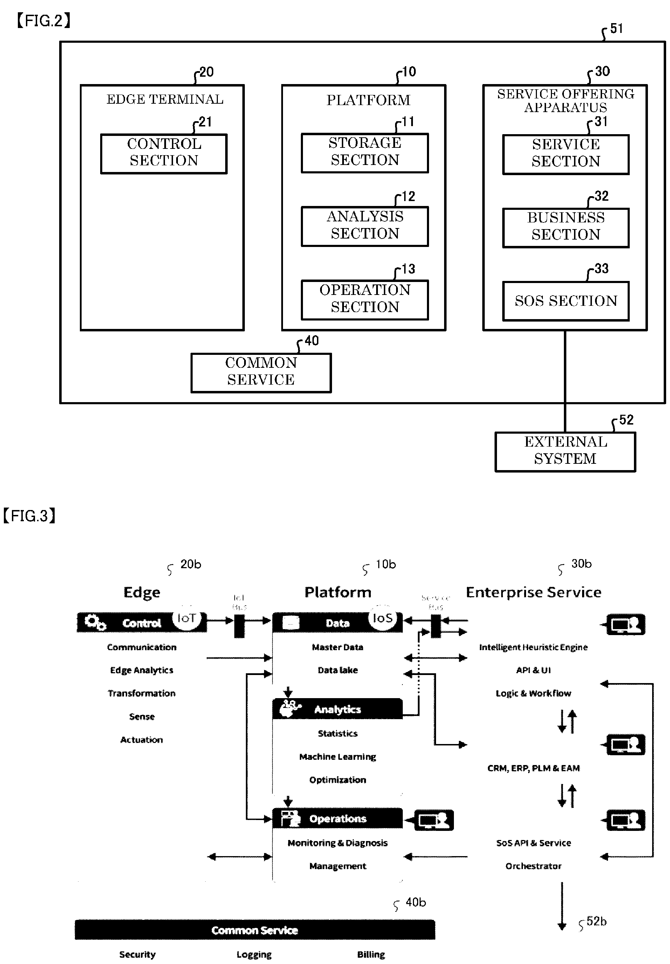

Figure 2 is a diagram showing an example of a specific configuration of the CPS system. An information processing system 51 includes a platform 10 serving as an information processing apparatus, an edge terminal 20, a service offering apparatus 30, and a common service 40.

The edge terminal 20 is connected to the platform 10, for example through an interface serving as an Internet of Things (IoT) bus. The platform 10 is connected to the service offering apparatus 30 (an enterprise service), for example through a service bus such as an Application Programming Interface (API). The IoT bus and the service bus may be implemented in any manner. For example, the IoT bus and the service bus may be implemented by a network (whether wired or wireless) such as the Internet.

The information processing system 51 may be connected to an external system 52, for example through a network such as the Internet. The external system 52 operates in cooperation with the service offering apparatus 30.

While Fig. 2 shows each single component such as the edge terminal 20, the platform 10, the service offering apparatus 30, and the external system 52, more than one component may be provided. The overall information processing system 51 can be regarded as corresponding to the CPS system. Alternatively, each of the service offering apparatus 30 and the external system 52 can be regarded as corresponding to the CPS system.

The edge terminal 20 includes a control section 21 for controlling various types of processing performed in the edge terminal 20. For example, the control section 21 controls the following processing:
- collection of data such as sensor data;
- communication with an external apparatus such as the platform 10;
- analysis of data;
- conversion of data; and
- control of operation based on control information, for example transmitted from the platform 10.

The platform 10 includes a storage section 11, an analysis section 12, and an operation section 13. The storage section 11 stores data (hereinafter referred to as collected data) collected, for example by the edge terminal 20, and master data. The master data is data about the specifications of the edge terminal 20, specifications of operational environments, design drawing, and maintenance histories, for example.

The storage section 11 can be formed of any of widely used storage media such as a flash memory, memory card, Random Access Memory (RAM), Hard Disk Drive (HDD), and optical disk. A plurality of storage sections may be provided by physically different storage media or different storage areas of a physically single storage medium.

The analysis section 12 analyzes the collected data stored in the storage section 11 with Artificial Intelligence (AI) and/or IT technology (in the Cyber 2). For example, the analysis section 12 uses the AI to analyze the collected data. The AI used is, for example, a learning model including a neural network built through machine learning and deep learning. When a plurality of service offering apparatuses 30 are provided, the analysis section 12 may use a different AI capability for each of the service offering apparatuses 30 to analyze the collected data. The analysis method in the analysis section 12 is not limited to such a method with the AI but may be any method. The analysis section 12 can also have a function of converting (processing) the collected data.

The operation section 13 creates control information for controlling the edge terminal 20 based on the analysis results from the analysis section 12 or any other information and transmits the created control information to the edge terminal 20 to operate the edge terminal 20. The control information may be any information as long as it is provided to change the operational state of the edge terminal 20. For example, the control information is information for causing the edge terminal 20 (control section 21) to perform communication, analysis in the edge terminal 20, change of the operational state, sensing, and provision of operation instructions.

The control section 21 of the edge terminal 20 transmits the collected data to the platform 10 and receives the control information from the platform 10. The control section 21 performs control within the edge terminal 20 based on the control information. The control section 21 further transmits collected data to the platform 10 based on the changed operational state of the edge terminal 20 and receives control information from the platform 10. This loop (CPS loop) is repeated to achieve control of the edge terminal 20 in large volume based on the collected data accumulated in the platform 10 and the analysis results from the collected data.

The service offering apparatus 30 offers services using at least one of the collected data and the analysis results. The service offering apparatus 30 includes a service section 31, a business section 32, and an SoS section 33.

The service section 31 is used to allow a person concerned (person responsible for management) to monitor the collected data accumulated in the platform 10 and the analysis results, to inspect the state of the CPS loop based on their knowledge, and to change the state of the CPS loop manually.

For example, the person responsible for management performs, based on their specialist knowledge, inspection of the CPS loop, audit, sensing of abnormality occurrence, and sensing of any AI error (abnormality in the CPS loop) due to an attack or any other cause, and monitors whether the information processing system 51 properly operates from their standpoint. When the person responsible for management perceives any abnormality in the CPS loop, they may perform troubleshooting of the CPS loop by transmitting control information through the service section 31 or by any other method.

The business section 32 offers services using the collected data, the analysis result and the like. For example, the business section 32 provides services related to Customer Relationship Management (CRP), Enterprise Resource Planning (ERP), Product Lifecycle Management (PLM), and Enterprise Asset Management (EAM).

The SoS section 33 includes a plurality of internal systems and performs coordination and other processing of those systems. For example, the SoS section 33 performs coordination (orchestration) of the CPS loop by using information created within the service offering apparatus 30 as well as the collected data accumulated in the platform 10 and the analysis results.

When a plurality of service offering apparatuses 30 are provided, the information processing system 51 includes a plurality of SoS sections 33. It should be noted that one service offering apparatus 30 may include a plurality of SoS sections 33. Each of the plurality of SoS sections 33 includes a plurality of internal systems. The plurality of SoS sections 33 may cooperate with each other through the platform 10 or without interposing the platform 10.

Each of the internal systems may be any system as long as it is independently managed and operated. For example, the internal system may be a CPS system or may be a system which offers services with the aid of a cloud server or a Multi Access Edge Computing (MEC) server. The internal system may be a system which offers services corresponding to those provided by the business section 32.

The internal system receives information and a request from the edge terminal 20 or any other component and returns information in response to the received information or request. The internal system may accumulate the information received from the edge terminal 20 or any other component to create information which reproduces the physical world on the cyber world (digital twin).

The SoS section 33 exchanges information with the plurality of distributed internal systems and provides a function which cannot be achieved by a single system. For example, in principle, each of the internal systems performs control for optimization (partial optimization) within an area controllable by that system. In contrast, the SoS section 33 orchestrates the plurality of internal systems and performs control for optimization (overall optimization) across all the orchestrated systems. The SoS section 33 is not limited thereto, and may be a system which provides a function different from those of the internal systems, for example.

Each of the internal systems may be associated with a single industrial field (service). The SoS section 33 orchestrates the internal systems belonging to different industrial fields, for example.

The industrial field refers to a business field classified as a single industry, and examples of the industrial field may include medical, education, industry, welfare, and judiciary. The industrial field may be any of the following industrial fields presented as five priority fields in Connected Industries announced by Japanese government as a new conceptual framework;
- Smart Life (including health care with precision medicine and purchase management based on smart receipts);
- Automated Driving and Mobility Services (including sharing of Electric Vehicles (EVs);
- Manufacturing and Robotics (including Factory Automation and Smart Manufacturing);
- Biotechnologies and Materials; and
- Plant/Infrastructure Safety Management.

The industrial fields are not limited to the above examples but are defined and classified differently by corporations and government and public organizations. Business fields belonging to a single industry may be classified in any manner. For example, "Plant/Infrastructure Safety Management" may be divided into an energy field and an infrastructure field. In addition, two or more of the above industrial fields may be integrated and defined as a single aggregated industrial field. Any of the above industrial fields may be subdivided and defined.

The service offering apparatus 30 can receive data owned by a company and data owned by other companies and accumulate the received data in the storage section 11 of the platform 10 in order to provide data distribution among servers and data distribution among physical entities. The accumulated data can be analyzed in the analysis section 12. In this manner, the data uploaded to the platform 10 and the analysis results in the analysis section 12 are provided.

The common service 40 is an apparatus for offering services usable in common by the components (edge terminal 20, platform 10, service offering apparatus 30) within the information processing system 51. The common service 40 provides, for example, the following functions:
- a security function;
- a logging function; and
- a billing function.

Figure 3 is a diagram showing an exemplary implementation of the information processing system 51. The information processing system 51 in Fig. 3 includes an edge 20b, a platform 10b, an enterprise service 30b, and a common service 40b. The edge 20b, the platform 10b, the enterprise service 30b, and the common service 40b correspond to the edge terminal 20, the platform 10, the service offering apparatus 30, and the common service 40 in Fig. 2, respectively. Other domain 52b corresponds to the external system 52 in Fig. 2.

As described above, the CPS system provides the mechanism in which the information collected in the physical world (Physical) 1 is analyzed in the cyber world (Cyber) 2 through the computer technology to seek the effective use of the information in all industries. An embodiment of the information system for storage batteries described below represents the data distribution among servers and the data distribution among physical entities shown in Fig. 1 implemented by using the platform 10 and the service offering apparatus 30.

### (Embodiment 1)

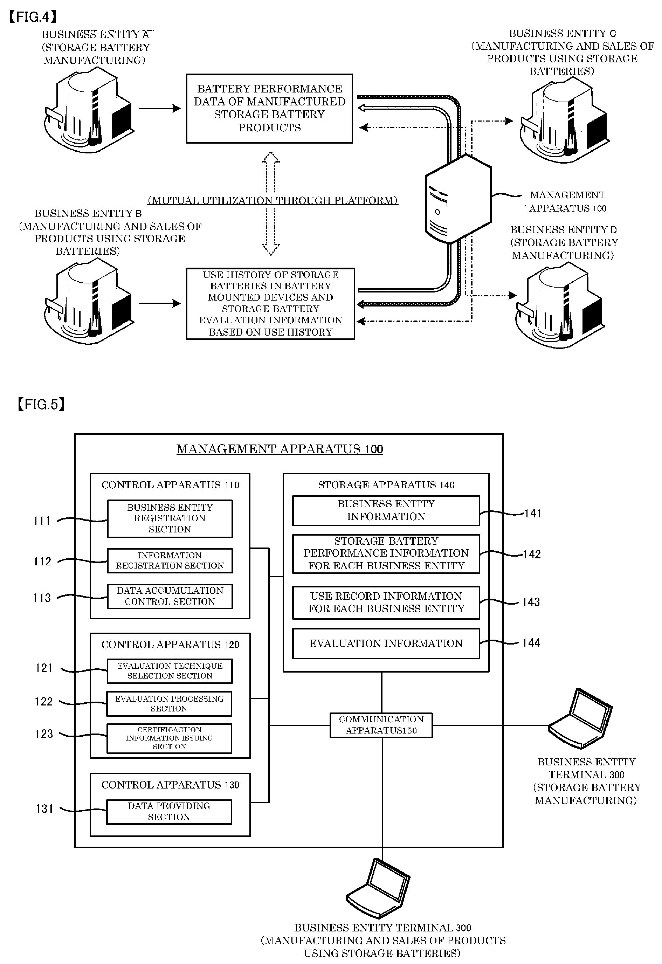

Figure 4 is a diagram showing a network configuration of the information system for storage batteries according to Embodiment 1, in which a management apparatus 100 provides the information system and each of terminals 300 is connected to and uses the information system.

The management apparatus 100 according to Embodiment 1 provides an information distribution platform on which business entities exchange various types of information about storage batteries. The business entities include, for example, storage battery material manufacturers which develop, manufacture, and sell materials of storage batteries (for example, battery material manufacturers), storage battery manufacturers which develop, manufacture, and sell storage batteries (for example, battery manufacturers), and storage battery mounted device providers which develop, manufacture, and sell products on which storage batteries are mounted (for example, automobile manufacturers).

It should be noted that the information system for storage batteries according to Embodiment 1 can be used not only by the business entities described above but also by service providers which offer services related to storage batteries or devices on which storage batteries are mounted (for example, insurers, secondhand goods dealers, and electricity suppliers), as later described.

The storage batteries include secondary batteries (for example, lithium-ion batteries and nickel metal hydride batteries), as well as capacitors (for example, electric double layer capacitors). These storage batteries are mounted on hybrid vehicles or electric vehicles for running those vehicles or as batteries for accessories, by way of example. In addition to those for automobiles, the storage batteries also include batteries mounted on mobile terminals such as smartphones and laptop computers, batteries mounted on rail vehicles running on electricity, and batteries used in stationary electricity storage systems.

Each business entity can connect to the management apparatus 100 from the terminal 300 operated by the business entity and transmit and receive various types of data about storage batteries through various functions provided by the management apparatus 100. The business entity terminal 300 may be an information processing terminal such as a personal computer having a communication function and a computing function, or a mobile communication terminal such as a smartphone.

Figure 5 is a diagram showing the functional blocks of the management apparatus 100. The management apparatus 100 includes a control apparatus 110, a control apparatus 120, a control apparatus 130, a storage apparatus 140, and a communication apparatus 150. While Fig. 5 shows an aspect in which three control apparatuses 110, 120, and 130 are separately provided for convenience of explanation, one control apparatus or any number of control apparatuses may be implemented.

The management apparatus 100 serves as the platform for distributing information about storage batteries and provides the following functions:
a) a data accumulation function of registering and accumulating various types of information about storage batteries;
b) an evaluation function of evaluating the registered information about storage batteries based on a predetermined evaluation technique; and
c) a data providing function of outputting the various types of registered information and the evaluation result from the evaluation function.

### <Data accumulation function>

The data accumulation function is provided for allowing each of storage battery material manufacturers, storage battery manufacturers, and storage battery mounted device providers to register information about storage batteries.
- Storage battery material information refers to battery material data and includes data about the material manufacturer, material type (examples of positive electrode materials include lithium cobalt oxide, lithium manganese oxide, lithium nickel oxide, lithium iron phosphate, ternary positive electrode material, and examples of negative electrode materials include graphite, hard carbon, lithium titanate, Si-based negative electrode material, and Sn-based negative electrode material), average voltage, capacity per weight, and energy per weight.
- Storage battery information registered by storage battery manufacturers refers to battery performance data of their storage battery products and includes header information indicating the battery manufacturer and battery type (or model number) and status information indicating primary specifications (such as size, capacity, operating voltage, current, and temperature range, and electrode materials), life test conditions, life test evaluation result, storage SOC and temperature, and shelf life. In other words, information about storage batteries before use provided by the storage battery manufacturers is registered.
- Information registered by storage battery mounted device providers refers to a history of use of a storage battery in a device on which the storage battery is mounted and evaluation information of the storage battery based on the use history, and includes, for example, header information such as information indicating the storage battery manufacturer and the type of the used storage battery and management information of the storage battery mounted device provider indicating the storage battery module structure and type, battery pack configuration and type, storage battery ID information (identification information), storage battery lot number, manufacture date, and device information indicating the device type (for example, EV type). The use history linked to the header information includes device operation conditions (such as SOH (based on device self-diagnosis), temperature history, current history, and voltage history), operation period, number of charges, number of fast charges, running distance, number of Vehicle to Everything communications (Vehicle to X or V2X), replacement history (for example, a log of battery case replacements), diagnosis result from the storage battery mounted device provider (for example, the result of internal state estimation including the positive electrode amount, negative electrode amount, operation window shift capacity, battery capacity, internal resistance value, and SOH), and assembled battery information (for example, deterioration variations among battery cells and modules, and balance among battery cells and modules).

The control apparatus 110 of the management apparatus 100 includes a business entity registration section 111, an information registration section 112, and a data accumulation control section 113.

The business entity registration section 111 provides a user registration function in the system according to Embodiment 1. The storage apparatus 140 stores information input thereto through the user registration function as business entity information 141 for each business entity. It should be noted that the business entity information 141 may be any information that allows identification and authentication of each business entity such as a company name and contact information. The business entity registration section 111 displays a user registration screen on the business entity terminal 300, receives the business entity information 141 input to the screen, and stores the information in the storage apparatus 140.

The information registration section 112 provides an interface for registering (including uploading) the information input from the storage battery manufacturers and the information input from the storage battery mounted device providers described above. The information registration section 112 can provide a first registration screen for receiving the information to be registered by the storage battery manufacturers and a second registration screen for receiving the information to be registered by the storage battery mounted device providers. Each business entity inputs various types of information on the business entity terminal 300, and the data accumulation control section 113 stores the input information in the storage apparatus 140 for each business entity. In the example of Fig. 5, the information registered by the storage battery manufacturers corresponds to storage battery performance information for each business entity 142, and the information registered by the storage battery mounted device providers corresponds to use record information for each business entity 143. It should be noted that the interface may be configured in any manner.

As described above, the information registration section 112 can receive an uploaded data file including the information to be registered by the storage battery manufacturer in a predetermined data format, and the data accumulation control section 113 stores the received data file in the storage apparatus 140. The data accumulation control section 113 can store each data item included in the data file in accordance with the data structure of the storage battery performance information for each business entity 142 which stores the data input on the first registration screen. The information registered by the storage battery mounted device providers is similarly stored.

### <Evaluation function>

The storage battery deteriorates due to repeated charge and discharge (use) to change in internal state (battery deterioration state). Such changes of the internal state of the storage battery (battery deterioration behavior) are detected, and input/output control of charge/discharge power is performed in response to each detected state. The detection of the battery deterioration behavior also allows estimation of the battery residual life. It is thus important to evaluate the storage battery based on its use history acquired in the device on which the storage battery is mounted and used.

This is also the case with the life test evaluation result registered by the storage battery manufacturer. The storage battery manufacturer performs charge/discharge tests under conditions determined in view of actual use conditions to create evaluation information about changes of the internal state of the storage battery based on an evaluation criterion and an evaluation technique selected by the manufacturer.

However, the business entities use different evaluation criteria and different evaluation techniques, so that the evaluation information about the battery deterioration behavior registered by the storage battery manufacturers and storage battery mounted device providers may not be used in the form as it is provided. To accommodate such differences in the evaluation, the platform according to Embodiment 1 has an evaluation function of evaluating the battery deterioration behavior using a preset (arbitrarily selected) single evaluation technique to create evaluation information standardized on the platform, or platform-based evaluation information.

The control apparatus 120 of the management apparatus 100 includes an evaluation technique selection section 121 and an evaluation processing section 122.

The evaluation technique selection section 121 provides a function of setting an evaluation technique for use in evaluation processing performed by the evaluation processing section 122. Embodiment 1 is described in an exemplary aspect in which a battery deterioration calculation method (charge curve analysis method) described in Japanese Patent No. 5889548 is set as the evaluation technique. The present invention is not limited thereto, and other evaluation techniques can be applied. For example, a system operator can previously register a plurality of evaluation techniques (evaluation logics) in the management apparatus 100 and set any one of the evaluation techniques as the platform evaluation technique.

The charge curve analysis method includes, for example, receiving input information indicating measured values such as the measured charge current and charge amount during a predetermined measurement period, and associated charge voltage and temperature, included in the life test conditions and test results registered by the storage battery manufacturers and in the use history registered by the storage battery mounted device providers, using a preset function map representing the relationship between charge amount and charge voltage in a plurality of active materials included in a battery to estimate an internal state amount (including the positive electrode capacity, positive electrode diffusion resistance, positive electrode Li-ion concentration at the start of charge, negative electrode capacity, negative electrode diffusion resistance, negative electrode Li-ion concentration at the start of charge, and ohmic resistance plus reaction resistance), and calculating the capacity, internal resistance, and deterioration degrees of positive and negative electrodes based on the estimation result of the internal state amount. Thus, the battery deterioration behavior data indicating the measured values in the tests or actual use can be used as input information to calculate the estimation value of the internal state amount, capacity, internal resistance, and deterioration degree from the charge curve analysis map.

As described above, the different evaluation results from the respective business entities as well as the common evaluation technique can be used to create and provide the evaluation result of the storage battery based on the same evaluation technique and the same evaluation criterion (hereinafter referred to as "platform-based evaluation information").

The evaluation processing section 122 can perform the evaluation processing at an arbitrary time and store the evaluation result in the storage apparatus 140. For example, the evaluation processing may be performed at an arbitrary time after the reception of the information registered by the battery manufacturers and the information registered by the storage battery mounted device providers or at an arbitrary time after the reception of an evaluation request input from the business entity terminal 300.

The evaluation processing section 122 can rank the evaluation results created through the evaluation processing. For example, the evaluation processing section 122 can previously create and set rank information indicating levels of the internal state amount and assign appropriate rank information to the estimation result of each internal state amount.

A certification information issuing section 123 issues and provides, with a tamper-resistant technology, certification information which identifies the evaluation technique and indicates that the evaluation result of the storage battery (platform-based evaluation information) has been evaluated on the platform.

The platform-based evaluation information may be created for each of the plurality of evaluation techniques. In this case, the data providing function later described can include allowing the business entity to obtain the platform-based evaluation information standardized based on an arbitrary evaluation technique and to control the characteristics of each evaluation technique to be selectable and changeable in accordance with desired information.

### <Data providing function>

The data providing function includes a search function and a data output function and is provided by a data providing section 131 of the control apparatus 130 of the management apparatus 100.

Each business entity can connect to the management apparatus 100 from the business entity terminal 300 and search for various types of desired data on a search screen provided by the data providing section 131. The data providing section 131 has functions of outputting the search result and displaying and outputting (downloading) data based on the search result. This can achieve the environment which allows data sharing between business entities in combination with the data accumulation function described above.

The data providing section 131 extracts data which satisfies search conditions input to the search screen from the storage battery performance information for each business entity 142, the use record information for each business entity 143, and/or the evaluation information 144, and transmits the search result to the business entity terminal 300. The search result is, for example, summary information including the header information stored in the storage apparatus 140. The header information is linked to actual data (including the status information about the battery performance of the storage battery products, use history and evaluation information (acquired from evaluation in the business entities) of storage batteries, and platform-based evaluation information). In response to a selection operation performed on the search result, the data providing section 131 provides the actual data by displaying a predetermined screen including the actual data on the entity terminal 300 or by downloading the actual data to the entity terminal 300 in a predetermined file format such as a CSV format.

### <Description of management and distribution of data about storage battery on platform according to Embodiment 1>

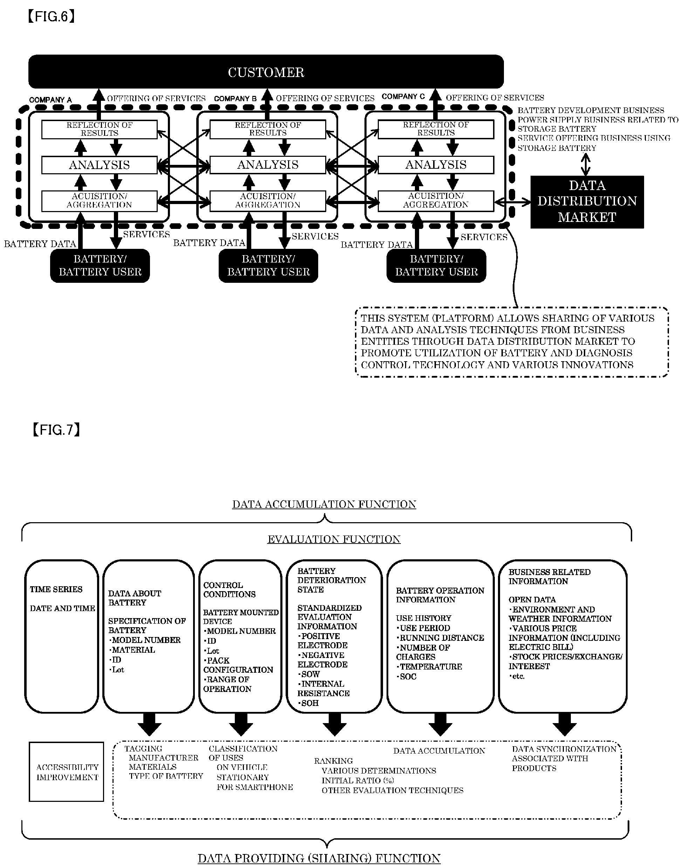

Figure 6 is a schematic explanatory diagram showing the information distribution platform provided by the management apparatus 100. As shown in Fig. 6, the platform for using storage battery operation data and evaluation data can be provided to construct a valuable data distribution environment.

The feature for data distribution among business entities as indicated by arrows in the example of Fig. 6 conventionally has not been present, so that the business entities have had no opportunity to promote the upgrading of technology through information provision (information sharing). However, the system according to Embodiment 1 can provide an environment in which business entities share their data about storage batteries and analysis data and/or analysis techniques on the distribution platform to promote utilization of better batteries and better battery diagnosis control technologies and various types of innovations.

In the data distribution, it is desirable that shared information be not tampered. The system according to Embodiment 1 issues and provides, with the tamper-resistant technology, the certification information which identifies the set evaluation technique and indicates that the evaluation result of the storage battery (platform-based evaluation information) has been evaluated on the platform, which can achieve secure data distribution.

Particularly, it is important for the storage battery manufacturers and the storage battery mounted device providers to know which analysis techniques are used for analysis by other business entities. For example, different analysis techniques perform analysis from different perspectives of evaluation. Since the system according to Embodiment 1 allows sharing of various perspectives of evaluation, a wide range of technological viewpoints can be introduced in the perspective of data acquisition and aggregation, the perspective of data analysis, and the perspective of reflecting the analysis result in products and services.

Figure 7 is a diagram showing the functions provided by the system according to Embodiment 1 and examples of various types of data handled in the system. As described above, the management apparatus 100 provides the three functions including the data accumulation function, the evaluation function, and the data providing function to implement the data distribution platform associated with storage batteries.

As shown in Fig. 7, the data accumulation function includes registering various types of data from business entities, and for the purpose of improving accessibility of data, can be configured to have functions of battery data tagging, classification of uses, ranking, data accumulation (including tracking function), and data synchronization associated with products. The tagging, classification of uses, ranking and the like can serve as key information in the data providing (sharing) function such that each business entity uses the key information to search for desired data and receive the provided data on the data distribution platform with enhanced convenience.

Since Embodiment 1 provides the evaluation function standardized on the data distribution platform, business entities can evaluate their products and use histories based on the same evaluation criterion and compare them with those from other business entities.

### 1) Example 1 of utilization of data distribution platform

- Object: to provide battery deterioration behavior data for allowing a battery manufacturer to estimate the battery residual life.
- Data content: details of a battery deterioration test and a result of internal state estimation performed with the diagnosis function of the platform according to Embodiment 1.
- Function of platform according to Embodiment 1: when the storage battery manufacturer uploads life test conditions and charge data (measured values corresponding to the test result), the evaluation function creates an internal state estimation result through the charge curve analysis based on various types of data acquired during the battery deterioration process in the battery life test. A storage battery mounted device provider can acquire the internal state estimation result.
- Merits: while the acquisition of the battery deterioration behavior data generally requires a long time period in years and an associated test apparatus and cost, the storage battery mounted device provider can reduce the cost and period required in battery evaluation by obtaining both the result data of the life test performed during battery development by the battery manufacturer and the internal state estimation result corresponding to analysis data provided from the platform.

### 2) Example 2 of utilization of data distribution platform

- Object: to allow a battery manufacturer or a battery mounted device provider to perform battery prototyping/simulation using various types of battery materials to estimate the effects of changed battery materials on various uses.
- Data content: information about storage battery materials and information about various types of battery mounted devices (including the size and shape of a battery section, and consumed power).
- Function of platform according to Embodiment 1: to calculate performance of batteries made from various types of battery materials and perform simplified estimation of the capacity, driving period, and running distance of the batteries mountable on various types of battery mounted devices.
- Merits: it is possible to rapidly evaluate the potential of performance improvement due to changed battery materials in batteries and battery mounted devices.

### 3) Example 3 of utilization of data distribution platform

- Object: to allow a battery manufacturer to obtain battery deterioration information from an actual battery product based on its internal state to acquire knowledge for use in battery development and perform early detection of occurrence of problems (including early deterioration and safety deterioration).
- Search screen: battery/device information, battery type/EV type, and battery manufacture date are specified. As device operation information, operation period, running distance, range of numbers of charges and fast charges, and amount of battery deterioration (indicating SOH or range of parameters of internal state) are specified.
- Search results: list of detected battery packs (devices), graph (representing battery capacity, internal state amount vs operation period/running distance/number of charges), and time-series plot of each device.

### 4) Example 4 of utilization of data distribution platform

- Object: to provide information about a battery mounted on a device and battery deterioration behavior data for estimating the battery residual life in actual use.
- Data content: device operation information and an internal state estimation result provided with the diagnosis function of the platform according to Embodiment 1.
- Function of platform: when device operation conditions and charge data (measured values in actual use) are uploaded, the evaluation function creates the internal state estimation result through the charge curve analysis during the battery deterioration process in the device operation.

- Merits: a storage battery mounted device provider sees that an estimated SOH value in the storage battery mounted device may depend on an uncertain criterion, have low accuracy, and fail to detect deteriorated safety. It is also difficult to acquire data about the overall battery deterioration process within the device. Thus, both the battery operation data from a use history and the internal state estimation result from the platform diagnosis function can be provided to find the deterioration behavior and perform deterioration prediction of the battery mounted on the device.

### 5) Example 5 of utilization of data distribution platform

- Object: to allow a storage battery mounted device provider to obtain battery deterioration information from a battery based on its internal state to acquire knowledge for use in device development and improve accuracy of residual life prediction of a device in use.
- Search screen: battery/device information, battery type, and registration date are specified. Information about storage battery life tests (test type, test period, and range of numbers of cycles), and amount of battery deterioration (indicating SOH or range of parameters of internal state) are specified.
- Search results: list of test data of detected storage batteries, graph (representing battery capacity, internal state amount vs test period/cycles).

### 6) Use case 1

The platform according to Embodiment 1 is used by business entities including a company A, a company B, and a company C, and those business entities are of "different industries." For example, the company A is a battery manufacturer, the company B is an automobile manufacturer, and the company C is an insurance company or a used-car dealer.

In a conventional example of use, the company B does not obtain "battery deterioration states" from the company A but performs analysis based on "battery data" and "control conditions (device information)" with a unique analysis technique to the company B. Such analysis of batteries mounted on EVs has limitations as compared with detailed analysis of batteries alone due to a significant difference in test environments between them (including physical times and loads).

To address this, the platform according to Embodiment 1 can be utilized. For example, the company B can obtain analysis data from the company A, that is, the "battery deterioration state," and use the obtained data in development of EVs (battery control) to enhance the value of the EVs. In this case, "battery data" and "control conditions" shown in Fig. 7 can be additionally used to increase the effect of utilization.

Then, the company A can obtain the battery operation information (use history) from the company B and use the obtained information in development of better batteries and battery diagnosis to promote innovations.

When the company B intends to purchase batteries from a plurality of battery manufactures other than the company A, the company B can obtain the "battery deterioration states" provided by the platform based on various types of data acquired during battery deterioration processes in battery life tests performed in the battery manufacturers other than the company A. This allows comparison and verification of batteries produced by those manufacturers.

The company C is a service provider which offers services related to storage batteries or devices on which storage batteries are mounted, and is an insurance company, by way of example. The company C can obtain "battery operation information" from the platform and set automobile insurance prices of EVs in view of "business related information" shown in Fig. 7. For example, when it is determined that a battery mounted on an EV has a relatively favorable state in terms of number of charges, temperature, and SOC for the distance traveled so far, a low failure rate of the vehicle is expected and thus a low automobile insurance price can be set. As another example, when the company C is a used-car dealer, the company C can obtain "battery operation information" from the platform and reflect the information in a used-car trading price in view of "business related information" shown in Fig. 7. For example, when it is determined that a battery mounted on an EV has a relatively favorable state in terms of number of charges, temperature, and SOC for the distance traveled so far, a favorable state of the vehicle is determined and thus the determination can help to set the trading price. When it is determined that a battery mounted on an EV has a relatively unfavorable state in terms of number of charges, temperature, and SOC for the distance traveled so far, value-added services including battery replacement can be provided to increase the customer satisfaction degree.

### 7) Use case 2

The platform according to Embodiment 1 is used by business entities including a company A, a company B, and a company C, and those business entities are of "the same industry." For example, all the company A, the company B, and the company C are virtual power plant (VPP) providers.

The company A, the company B, and the company C have their own batteries/battery users (see Fig. 6). Each of the company A, company B, and company C provides a service of supplying necessary electric power to customers (consumers) based on the battery data about the batteries/battery users (see Fig. 7).

The batteries/battery users of the company A, company B, and company C are retained by the respective companies. The companies separately acquire battery operation information to evaluate battery deterioration states. The input/output characteristics of electric power in the respective companies are different from each other.

However, only the batteries/battery users of one of those companies have limitations in a large electric power market in which electric power should be supplied to customers in response to varying demands (business related information).

To address this, each of the company A, company B, and company C shares the battery operation information (including battery data) with the other companies through the platform for analysis or shares the battery deterioration state with the other companies through the platform. This allows the companies to give each other electric power necessary for their customers (consumers) when varying demands cannot be met.

Although not shown in Fig. 7, various functions provided by the system according to Embodiment 1 and various types of data handled in the functions may include information about locations of batteries or battery mounted devices. The location information can be used to associate appropriate environment and weather information with use histories, evaluation information and the like. For example, when the battery mounted device is a device which runs on the ground, traffic congestion in the surrounding areas and level differences on hills represent factors affecting the operation and deterioration degree of batteries. Traffic congestion information and geographical information can be linked to the operation information and battery deterioration state based on the location information to produce more accurate evaluation information or help to analyze evaluation information.

When the battery mounted device is not a device which runs on the ground, weather conditions including temperature and atmospheric pressure also represent factors affecting the operation and deterioration degree of batteries. Weather information can be linked to the operation information and battery deterioration state based on location information to produce more accurate evaluation information or to help to analyze evaluation information.

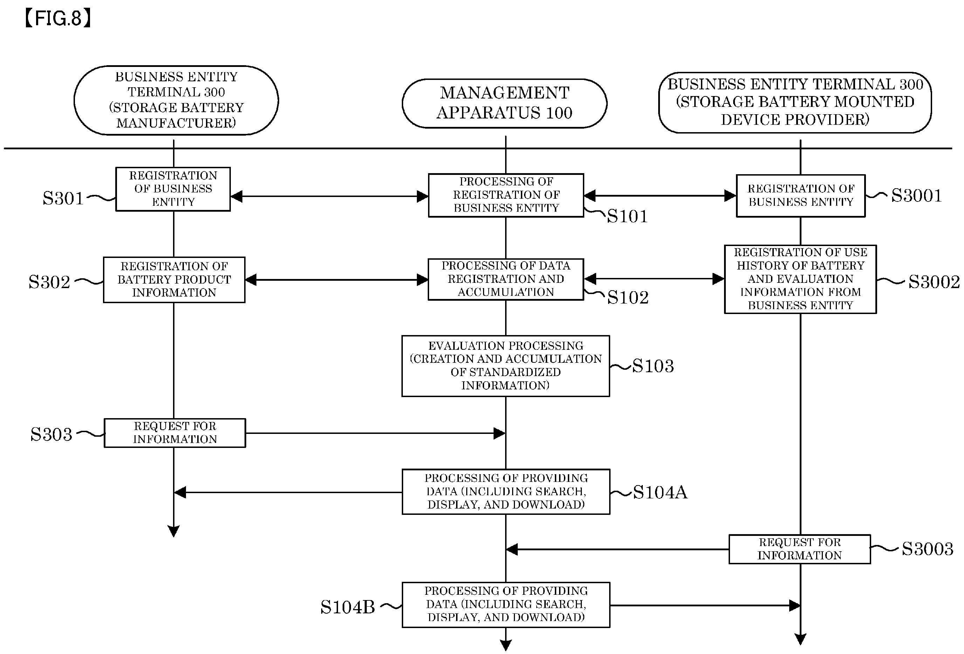

Figure 8 is a diagram showing a flow of processing performed by the information system for storage batteries according to Embodiment 1.

As shown in Fig. 8, the storage battery manufacturer connects to the management apparatus 100 on the business entity terminal 30 and performs business entity registration and registration of information about its storage battery product including battery performance data (status information) (S301, S302). The storage battery mounted device provider connects to the management apparatus 100 on the business entity terminal 300 and performs business entity registration and registration of a use history and evaluation information (acquired from evaluation with an evaluation technique employed by the provider) of a storage battery mounted on its device (S3001, S3002).

The management apparatus 100 performs business entity registration processing in response to the business entity registration performed by the storage battery manufacturer and/or the storage battery mounted device provider (S101), and provides an interface for information registration to each of the business entities. After reception of various types of information through the interface, the management apparatus 100 performs processing of registering and accumulating data in the storage battery performance information for each business entity 142 and use record information for each business entity 143 (S102).

The management apparatus 100 performs evaluation processing on the data registered and accumulated at step S102 (S103). For example, the management apparatus 100 creates an internal state estimation result through the charge curve analysis from battery deterioration behavior data (measured values) acquired in a test and uploaded by the storage battery manufacturer. The management apparatus 100 also creates an internal state estimation result through the charge curve analysis from battery deterioration behavior data (measured values) acquired in actual use and uploaded by the storage battery mounted device provider. The management apparatus 100 stores the estimation results (platform-based evaluation information) in the storage apparats 140.

Next, the storage battery manufacturer transmits a request for information from the business entity terminal 300 (S303) and then can use the data providing function provided by the management apparatus 100 (S104A). The same processing is performed in the storage battery mounted device provider (S3003, S104B).

According to Embodiment 1, it is possible to construct the data useful in understanding and designing batteries, offering services related to batteries, and considering business profitability. In addition, the battery operation data and analysis data have values and contribute to establishment of the distribution market. Business entities can register various types of information about storage batteries and use the registered information through the data distribution platform which allows sharing of various types of data about storage batteries and the analysis data/analysis techniques used in the business entities, which can achieve the environment in which better batteries and better battery diagnosis control technologies are used and various innovations are promoted.

While Embodiment 1 has been described above, the management apparatus 100 may be a computer apparatus having a computing function, a storage function, and a communication function such as a server apparatus. The management apparatus 100 can include, as a hardware configuration, a memory (main storage apparatus), operation input means such as a mouse, keyboard, touch panel and scanner, output means such as a printer, and an auxiliary storage apparatus (such as a hard disk).

The functions of the present invention can be implemented by a program. A computer program previously provided for implementing each function can be stored on an auxiliary storage apparatus, the program stored on the auxiliary storage apparatus can be read by a control section such as a CPU to a main storage apparatus, and the program read to the main storage apparatus can be executed by the control section to allow a computer to perform the function of each component in the present invention. Each of the functions of the management apparatus 100 can also be implemented by a different one of apparatuses, and those apparatuses can be connected directly or via a network to constitute a computer system.

In an example, the management apparatus 100 may be a cloud server configured in a cloud environment. Infrastructures in the cloud environment are provided by a virtual processor such as a virtual CPU and a cloud memory. Thus, when the management apparatus 100 is the cloud server, part of processing performed by the virtual processor is performed by the business entity registration section 111, the information registration section 112, the data accumulation control section 113, the evaluation technique selection section 121, the evaluation processing section 122, and the data providing section 131. The cloud memory serves as the storage apparatus 140.

The program may be recorded on a computer readable recording medium and provided for the computer. Examples of the computer readable recording medium include optical disks such as a CD-ROM, phase-change optical disks such as a DVD-ROM, magneto-optical disks such as a Magnet-Optical (MO) disk and Mini Disk (MD), magnetic disks such as a floppy disk^{®} and removable hard disk, and memory cards such as a compact flash^{®}, smart media, SD memory card, and memory stick. Hardware apparatuses such as an integrated circuit (such as an IC chip) designed and configured specifically for the purpose of the present invention are included in the recording medium.

As to the relationship between Embodiment 1 of the information system for storage batteries described above and the CPS system shown in Figs. 1 to 3, for example, the storage apparatus 140 in Fig. 5 may correspond to the storage section 11 in Fig. 2, and the control apparatus 120 in Fig. 5 may correspond to the analysis section 12 in Fig. 2. However, this is only illustrative, and the correspondence relationship between the functions shown in Fig. 5 and the functions shown in Fig. 2 may be changed in any manner.

While the embodiment of the present invention has been described, the embodiment is only illustrative and is not intended to limit the scope of the present invention. The novel embodiment can be implemented in various other forms, and various omissions, substitutions, and modifications can be made thereto without departing from the spirit or scope of the present invention. The embodiment and its variations are encompassed within the spirit or scope of the present invention and within the invention set forth in the claims and the equivalents thereof.

### DESCRIPTION OF THE REFERENCE NUMERALS

1 REAL WORLD (PHYSICAL)
2 CYBER WORLD (CYBER)
10 PLATFORM
11 STORAGE SECTION
12 ANALYSIS SECTION
13 OPERATION SECTION
20 EDGE TERMINAL
21 CONTROL SECTION
30 SERVICE OFFERING APPARATUS
31 SERVICE SECTION
32 BUSINESS SECTION
33 SOS SECTION
40 COMMON SERVICE
51 INFORMATION PROCESSING SYSTEM
52 EXTERNAL SYSTEM
10b PLATFORM
20b EDGE TERMINAL
30b ENTERPRISE SERVICE
40b COMMON SERVICE
52b OTHER DOMAIN
100 MANAGEMENT APPARATUS
110 CONTROL APPARATUS
111 BUSINESS ENTITY REGISTRATION SECTION
112 INFORMATION REGISTRATION SECTION
113 DATA ACCUMULATION CONTROL SECTION
120 CONTROL APPARATUS
121 EVALUATION TECHNIQUE SELECTION SECTION
122 EVALUATION PROCESSING SECTION
123 CERTIFICATION INFORMATION ISSUING SECTION
130 CONTROL APPARATUS
131 DATA PROVIDING SECTION
140 STORAGE APPARATUS
141 BUSINESS ENTITY INFORMATION
142 STORAGE BATTERY PERFORMANCE INFORMATION FOR EACH BUSINESS ENTITY
143 USE RECORD INFORMATION FOR EACH BUSINESS ENTITY
144 EVALUATION INFORMATION
150 COMMUNICATION APPARATUS
300 BUSINESS ENTITY TERMINAL

## Claims

1. An information system for transmitting and receiving various types of information about a storage battery, comprising:
a first information registration section(112) configured to accept registration of at least one information piece about a manufactured storage battery from a first terminal(300);
a second information registration section(112) configured to accept registration of at least one use history of a storage battery from a second terminal(300), the use history being collected by a storage battery mounted device and including a battery state information piece acquired at each of points in time during a period of use of the storage battery;
an accumulation control section(113) configured to accumulate the information piece about the storage battery and the use history;
an evaluation processing section(122) configured to create an internal state estimation result with a predetermined evaluation technique by using the registered information piece about the storage battery and/or the registered use history,
wherein the internal state estimation result as a platform-based evaluation information piece is accumulated in association with the registered information piece and/or the registered use history,
the information system further comprising a data providing section(131) configured to provide the registered information piece about the storage battery and the associated platform-based evaluation information piece or the registered use history and the associated platform-based evaluation information piece to at least one of the terminals(300).

2. The information system according to claim 1, further comprising a certification information issuing section(123) configured to certificate the predetermined evaluation technique and that the evaluation information piece has been evaluated by the information system based on the predetermined evaluation technique.

3. The information system according to claim 1 or 2, further comprising an evaluation technique selection section(121) configured to select the predetermined evaluation technique,
wherein the evaluation processing section(122) is configured to create the internal state estimation result with each of a plurality of evaluation techniques registered in the evaluation technique selection section(121), and
the data providing section(131) is configured to provide the platform-based evaluation information piece in accordance with the selected evaluation technique.

4. The information system according to any one of claims 1 to 3, wherein the information piece about the storage battery includes first battery deterioration behavior data acquired in a predetermined life test for the storage battery,
the use history includes second battery deterioration behavior data acquired during actual use of the storage battery mounted on the device, and
the evaluation processing section(122) is configured to receive the first battery deterioration behavior data and the second battery deterioration behavior data as input information pieces to perform evaluation processing of creating the internal state estimation result based on a preset relationship between a charge amount and a charge voltage in a plurality of active materials included in the storage battery.

5. The information system according to any one of claims 1 to 4, wherein the at least one information piece about the storage battery comprises a plurality of information pieces about the storage battery, and
the data providing section(131) includes a search function of providing a predetermined search screen on at least one of the terminals(300) and extracting any information piece of the plurality of information pieces about the storage battery satisfying a search condition input to the search screen, and based on a search result from the search function, transmits the extracted information piece about the storage battery and the associated platform-based evaluation information piece to the at least one of the terminals(300).

6. The information system according to any one of claims 1 to 4, wherein the at least one user history comprises a plurality of user histories, and
the data providing section(131) includes a search function of providing a predetermined search screen on at least one of the terminals(300) and extracting any user history of the plurality of user histories satisfying a search condition input to the search screen, and based on a search result from the search function, transmits the extracted use history and the associated platform-based evaluation information piece to the at least one of the terminals(300).

7. The information system according to any one of claims 1 to 6, wherein the information piece about the storage battery includes a battery performance information piece about a storage battery product and a material information piece about the storage battery.

8. A program comprising instructions for transmitting and receiving various types of information about a storage battery which, when executed by a computer, cause the computer to provide:
accepting registration of at least one information piece about a manufactured storage battery from a first terminal(300);
accepting registration of at least one use history of a storage battery from a second terminal(300), the use history being collected by a storage battery mounted device and including a battery state information piece acquired at each of points in time during a period of use of the storage battery;
accumulating the information piece about the storage battery and the use history;
creating an internal state estimation result with a predetermined evaluation technique by using the registered information piece about the storage battery and/or the registered use history;
accumulating the internal state estimation result as platform-based evaluation information piece in association with the registered information piece and/or the registered use history; and
providing the registered information piece about the storage battery and the associated platform-based evaluation information piece or the registered use history and the associated platform-based evaluation information piece to at least one of the terminals(300) .

9. An information providing method of transmitting and receiving various types of information about a storage battery, comprising:
accepting registration of at least one information piece about a manufactured storage battery from a first business entity;
accepting registration of at least one use history of a storage battery from a second business entity, the use history being collected by a storage battery mounted device and including a battery state information piece acquired at each of points in time during a period of use of the storage battery;
accumulating the information piece about the storage battery and the use history;
creating an internal state estimation result with a predetermined evaluation technique by using the registered information piece about the storage battery and/or the registered use history;
accumulating the internal state estimation result as a platform-based evaluation information piece in association with the registered information piece and/or the registered use history; and
providing the registered information piece about the storage battery and the associated platform-based evaluation information piece or the registered use history and the associated platform-based evaluation information piece to at least one of the business entities.
